# EUROPÄISCHE PATENTANMELDUNG

(11) **EP 2 048 077 A2**
(43) Veröffentlichungstag der Anmeldung: **15.04.2009**
(21) Anmeldenummer: 08017702.5
(22) Anmeldetag: 09.10.2008
(51) Int. Cl.: B64C 9/16, B64C 9/22

(54) **Auftriebsklappenträgersystem**

(30) Priorität: 10.10.2007 DE 102007048449
(71) Anmelder: EADS Deutschland GmbH, 85521 Ottobrunn (DE)
(72) Erfinder: Perez-Sanchez, Juan, 83043 Bad Aibling (DE); Schuhmacher, Gerd, Dr., 85551 Heimstetten (DE); Pauly, Markus, 83052 Bruckmühl (DE); Bechtle, Siegfried, 81375 München (DE); Mendler, Josef, Dr., 83075 Bad Feilnbach (DE); Frank, Dieter, 83059 Kolbermoor (DE)

(57) **Zusammenfassung**

Die Erfindung betrifft eine Vorrichtung zum Tragen von an den Tragflächen eines Flugzeugs angeordneten Auftriebsklappen umfassend einen Träger (1) mit einem U-förmigen Profil sowie eine für die offene Seite des Trägers vorgesehene Abdeckplatte (7), wobei die Vorrichtung ein aerodynamisch ausgestaltetes Fairinggehäuse umfasst und der Träger einen Teil des Fairinggehäuses bildet.

## Beschreibung

Die Erfindung betrifft eine Vorrichtung zum Tragen von an den Tragflächen eines Flugzeugs angeordneten Auftriebsklappen gemäß dem Oberbegriff des Patentanspruchs 1.

Einen Tragflügel mit ausfahrbaren aerodynamischen Auftriebsklappen und einer von einem Fairinggehäuse umschlossenen Antriebseinheit ist aus DE 10 2005 016 639 A1 bekannt.

Ein Auftriebsklappen-Mechanismus zum Verstellen einer einem Tragflügel zugeordneten Auftriebsklappe mit einer Mehrzahl von Lenkhebel-Anordnungen ist aus EP 1 404 573 B1 bekannt.

Eine Trag- bzw. Führungsvorrichtung für eine Landeklappe der angegebenen Art ist beispielsweise aus der DE 41 07 556 C1 bekannt, welche einen Träger mit im Wesentlichen U-förmigem Profil aufweist, der aus Aluminiumguss besteht und zur Führung eines Wagens, der mit der Landeklappe verbunden ist, Lastschienen aufweist. Zur Gewährleistung der erforderlichen Steifigkeit sind Versteifungselemente in Form eines Torsionskastens, eines Zugbands und einer Querstrebe vorgesehen. Während des Starts und während der Landung werden die Landeklappen ausgefahren, so dass ein größerer Auftrieb geschaffen wird. Naturgemäß treten dabei enorme Belastungen auf den Landeklappen und in der Folge den Trag- bzw. Führungsvorrichtungen auf, weshalb diese besonders hohe Steifigkeitswerte aufweisen müssen. Die Bewegung der Landeklappe wird üblicherweise über eine am Flügelholmkasten angebrachte Antriebsspindel mit entsprechendem Getriebe auf die Landeklappen übertragen. Dabei ist an der Trag- bzw. Führungsvorrichtung ein Getriebe befestigt, welches beispielsweise über einen Hebel die Landeklappe verschiebt und verschwenkt. Dabei werden hohe Drehmomente in den Träger eingeleitet, welche dessen Struktur nicht negativ beeinflussen dürfen. Auch im Falle eines Klemmens der Landeklappe darf der Träger der Trag- bzw. Führungsvorrichtung nicht zerstört werden. Üblicherweise bestehen daher derartige Träger aus Stahl, Aluminium oder Titan mit einer entsprechenden Anzahl von Verstärkungselementen. Daraus resultiert ein relativ hohes Gewicht, welches in der Flugzeugtechnik aufgrund des resultierenden höheren Treibstoffverbrauchs vermieden werden sollte und darüber hinaus ein hoher Herstellungs- und Montageaufwand.

Eine verbesserte Variante eines Trägers beschreibt EP 1 438 230 B1. Dieser U-förmige Träger ist aus faserverstärktem Kunststoff gefertigt. Dem Träger ist eine Abdeckplatte zugeordnet, mit welcher die offene Seite des Trägers abgedeckt wird. Diese Abdeckplatte sowie weitere am Träger vorhandene Elemente zur Verbindung mit anderen Bauelementen sowie zur Versteifung des Trägers sind ebenfalls aus faserverstärktem Kunststoff hergestellt.

Der U-förmige Träger ist mit seiner Unterseite an der Tragfläche befestigt, so dass die offene Seite des Trägers von der Tragfläche abgewandt ist. Zur Durchführung von Wartungsarbeiten im Innenraum eines am Tragflügel befestigten Trägers müssen eine Vielzahl von Arbeitschritten durchgeführt werden, um die Zugänglichkeit zu gewährleisten. Auch muss z.B. das den Träger umschließende Fairinggehäuse demontiert werden.

Es ist Aufgabe der Erfindung eine Vorrichtung zum Tragen von Auftriebsklappen bereitzustellen, welche die o.g. Nachteile des Standes der Technik umgeht.

Die Aufgabe wird mit der Vorrichtung gemäß den Merkmalen des geltenden Patentanspruchs 1 gelöst. Vorteilhafte Ausgestaltungen der Erfindung sind Gegenstand von Unteransprüchen.

Die erfindungsgemäße Vorrichtung zum Tragen von Auftriebsklappen umfasst einen Träger mit einem U-förmigen Profil sowie eine für die offene Seite des Trägers vorgesehene Abdeckplatte. Weiterhin umfasst die Vorrichtung ein aerodynamisch ausgestaltetes Fairinggehäuse, wobei der Träger einen Teil dieses Fairinggehäuses umfasst.

Dadurch, dass der Träger selbst einen Teil des Fairinggehäuses bildet, wird Gewicht eingespart. Ferner kann der Träger wesentlich einfacher und schneller montiert werden, als dies beim Stand der Technik möglich ist. Weitere Vorteile sind die bessere Raumnutzung, da der Träger die Form des Fairings annimmt, sowie die höhere Steifigkeit des Trägers.

Zweckmäßig weist die offene Seite des U-förmigen Trägers in Richtung der Tragfläche. Im Gegensatz zur Ausführung von EP 1 438 230 B1, bei welcher die offene Seite des Trägers von der Tragfläche abgewandt angeordnet ist, ist bei dem erfindungsgemäßen Träger so ein bessere Inspizierbarkeit der Innenräume und somit eine bessere Wartung des Trägers möglich.

Gemäß einem weiteren Merkmal der Erfindung weist der Träger Versteifungsstrukturen auf. Diese Versteifungsstrukturen können an der Trägerwandung in Form von Profilen mit Z-, U- oder I-formigen bzw. ähnlich gestalteten Querschnitten angeordnet sein. Darüber hinaus ist auch eine fachwerkartige Versteifungsstruktur möglich.

Der erfindungsgemäße Träger, sowie die erfindungsgemäße Abdeckplatte und die etwaigen Versteifungsstrukturen können gemäß einer besonderen Ausgestaltung der Erfindung aus kohlenfaserstoffverstärktem Kunststoff gefertigt sein. Dadurch kann einerseits das Gewicht reduziert werden und andererseits die Anzahl der Einzelteile der Trägervorrichtung durch die integrale Bauweise bei der Verwendung von Kunststoff reduziert werden. Die Herstellung der erfindungsgemäßen Vorrichtung aus faserverstärktem Kunststoff kann in bekannter Weise durch Anordnung von in Harz getränkten Gewebelagen, so genannten Prepregs, auf einer Form und Aushärtung der Anordnung in einem Autoklaven unter Wärme und Druck erfolgen. Die erfindungsgemäße Vorrichtung kann zweckmäßig auch in VAP-Bauweise nach dem Harzinfusionsverfahren hergestellt werden. Dieses Verfahren ist aus DE 199 15 083 C1 bekannt..

Selbstverständlich ist auch eine Mischbauweise möglich, bei welcher Versteifungselemente aus Metall und kohlenfaserverstärktem Kunststoff gefertigt sind.

Zweckmäßig können in dem Fairing Öffnungen zur möglichen Integration von Antrieben des Klappenführungsmechanismus vorgesehen sein. Dadurch kann weiteres Gewicht eingespart werden.

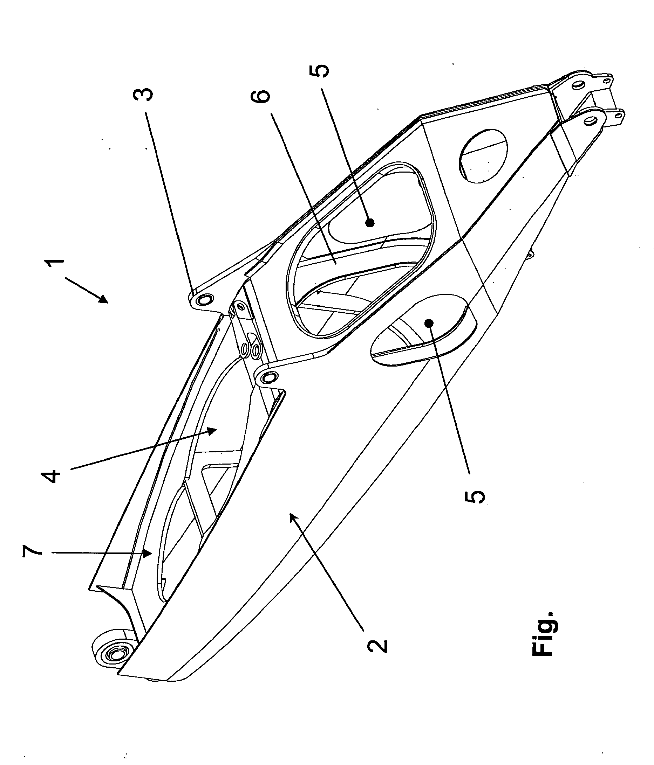

Die Erfindung sowie vorteilhafte Ausgestaltung der Erfindung wird nachstehend anhand einer Zeichnung näher erläutert. Die einzige Figur zeigt einen schalenförmigen Träger. Die Schalenform entspricht dabei in vorgegeben Bereichen der aerodynamischen Form des Fairinggehäuses.

Die Fig. zeigt einen erfindungsgemäßen Träger mit einem U-förmigen Profil.

Der Träger 1 weist im stromaufwärts gelegenen Bereich 2 eine geschlossene aerodynamische Schalenform auf. Dieser Bereich des Trägers ist somit geeignet, die Funktion des Fairinggehäuses zu übernehmen. Damit kann auf das üblicherweise im Stand der Technik verwendete aerodynamische Fairing, welches als einzelnes Bauteil die Trägerstruktur umgibt, verzichtet werden.

Der schalenförmige und somit fairingskonforme Träger weist integrierte Flügelanschlussaugen 3 auf, mittels welchen die Konstruktion an der Unterseite der Tragfläche eines Flugzeugs (nicht dargestellt) befestigt werden kann.

Die im Wesentlichen U-förmige Schalenform weist eine in Richtung der Tragflächenunterseite zugewandter Öffnung 4 auf. Diese Öffnung 4 kann mit einer Abdeckplatte 7, die nicht komplett geschlossen oder mit Erleichterungslöchern ausgeführt ist, verschlossen werden. Die U-förmige Trägerstruktur 1 weist Öffnungen 5 auf, um bei Bedarf den im Innern des Trägers 1 befindlichen (nicht dargestellt) Klappenführungsmechanismus (Antrieb) im Träger integrieren zu können.

Die Konstruktion weist ferner eine im Wesentlichen fachwerkförmige Innenversteifung 6 auf, die es erlaubt, eine gewichtsoptimierte Bauweise zu realisieren.

## Patentansprüche

1. Vorrichtung zum Tragen von an den Tragflächen eines Flugzeugs angeordneten Auftriebsklappen umfassend einen Träger mit einem U-förmigen Profil sowie eine für die offene Seite des Trägers vorgesehene Abdeckplatte,
**dadurch gekennzeichnet, dass**
die Vorrichtung ein aerodynamisch ausgestaltetes Fairinggehäuse umfasst, wobei der Träger zumindest einen Teil des Fairinggehäuses bildet.

2. Vorrichtung nach einem der vorangehenden Ansprüche, **dadurch gekennzeichnet, dass** der Träger Mittel zur Befestigung des Trägers an der Tragfläche aufweist.

3. Vorrichtung nach einem der vorangehenden Ansprüche, **dadurch gekennzeichnet, dass** der Träger Aussparungen aufweist.

4. Vorrichtung nach einem der vorangehenden Ansprüche, **dadurch gekennzeichnet, dass** der Träger Versteifungsstrukturen aufweist.

5. Vorrichtung nach einem der vorangehenden Ansprüche, **dadurch gekennzeichnet, dass** die Abdeckplatte und/oder die Versteifungsstrukturen mit dem Träger über Klebeverbindungen miteinander verbunden sind.

6. Vorrichtung nach Anspruch 6, **dadurch gekennzeichnet, dass** zusätzlich zu den Klebeverbindungen Verbindungselemente, wie z.B. Nieten oder Schrauben vorgesehen sind.

7. Vorrichtung nach einem der vorangehenden Ansprüche, **dadurch gekennzeichnet, dass** der Träger, die Abdeckplatte und/oder die Versteifungsstrukturen aus kohlenstofffaserverstärktem Kunststoff hergestellt sind.

8. Vorrichtung nach einem der Ansprüche 1-7, **dadurch gekennzeichnet, dass** der Träger, die Abdeckplatte und/oder die Versteifungsstrukturen nach dem Harzinfusionsverfahren hergestellt sind.

9. Vorrichtung nach einem der Ansprüche 1-7, **dadurch gekennzeichnet, dass** der Träger, die Abdeckplatte und/oder die Versteifungsstrukturen nach Prepreg-Verfahren (unter Einsatz eines Autoklaven) hergestellt sind.
